# EUROPEAN PATENT APPLICATION

(11) **EP 2 425 707 A1**
(43) Date of publication of application: **07.03.2012**
(21) Application number: 10769356.6
(22) Date of filing: 08.04.2010
(51) Int. Cl.: A01G 9/02, A47G 7/04

(54) **ASSEMBLY SYSTEM FOR FORMING WINDOW BOXES**

(30) Priority: 27.04.2009 ES 200901084
(71) Applicant: Fasqua, S.L., 39600 Muriedas (Cantabria) (ES)
(72) Inventor: CARRAL CASTANEDO, Federico, 39600 Muriedas (Cantabria) (ES)
(74) Representative: Intès, Didier Gérard André
(86) International application number: PCT/ES2010/000149
(87) International publication number: WO 2010/125209

(57) **Abstract**

The invention relates to an assembly system for forming planters applicable for forming planters formed by means of connecting modular elements, comprising engagement parts (5) which are fixed on the elements (1) forming the side walls of the planters, and insertion parts (6) in the mentioned engagement parts (5) for establishing, by means of coupling said parts (5 and 6), the connections among the elements (1) of the side walls of the planters and the connections of said elements (1) of the side walls with a base element (2) and with a mouth element (3) in the planters.

## Description

### Field of the Art

The present invention relates to forming planters by means of prefabricated modular elements, proposing an assembly system which allows very easily connecting the prefabricated modular elements for forming planters which may have variable configurations.

### State of the Art

In the field of urban public furnishings as well as in private applications of outdoor furnishings, aesthetic planters with different construction solutions are known.

Given the shape variation possibilities of planters which can be of interest, as well as due to the volume which planters have in their assembled arrangement, solutions for forming them by means of prefabricated modular elements which are assembled for forming the desired planter at the installation site thereof are known.

Said solutions for forming the planters by means of prefabricated modular elements nevertheless require solutions which allow the simple and quick connection of the modular elements so that the assembly can be done by any user, but which further are efficient solutions in terms of effectiveness and security of the connections, so that the structure of the formed planters is strong.

### Object of the Invention

According to the invention an assembly system is proposed, whereby the connection of the modular elements forming the planters is very simple.

This assembly system object of the invention has engagement parts and insertion parts, the engagement parts determining housings provided with a locking flange, while the insertion parts determine tabs which are capable of being introduced into the housings of the engagement parts, said tabs having an opening with respect to which the locking flange of the insertion housings forms a retention engagement.

The engagement parts are made up of a plate formed with deep drawings determining the housings for receiving the insertion parts, a punching being defined in the same deep drawing with the wall bent inwardly forming the locking flange.

The insertion parts are made up of a plate determining at least one tab shaped in correspondence with the cavity of the deep drawings of the engagement parts, said tab being provided with a punching which determines the engagement opening for retention.

According to one embodiment, respective insertion parts are fixed in the elements forming the side walls of the planters, the connection between said elements being established by means of independent insertion parts defined with two tabs which are inserted into the engagement parts of the coinciding elements in the connection.

According to another embodiment, engagement parts are fixed in one of the elements of the connections of the side walls of the planters, while insertion parts defined with a tab which is inserted into the respective engagement part arranged in the other coinciding element in the connection are fixed in the other coinciding element in the connection. With this embodiment no loose part is used in the connection since both the engagement parts and the insertion parts are fixed on the elements to join.

In any of the embodiments the insertion parts can be straight for connecting consecutive sections of one and the same wall, or angular for connecting walls coinciding in a vertex, planters of different dimensions and shapes being able to be formed by means of the connection of modular elements with the assembly parts necessary for the connections to be formed in each case.

The base of the planters, as well as the frame of the mouth, if they have one, are fastened by means of an assembly similar to that of the connections of the side walls, with insertion parts fixed on the base element and on the mouth element, whereby an insertion assembly is established with respect to the engagement parts incorporated in the elements forming the side walls.

With the proposed system, the assembly of the planters only requires coupling the modular component elements such that the insertion parts are assembled in the engagement parts without needing to use tools, resulting in a very quick assembly that can be done by anyone, with connections between the component elements assuring a strong assembly.

Due to the aforementioned the assembly system object of the invention results from certainly advantageous features, acquiring its own identity and preferential character for the planter assembly function for which it is intended.

### Description of the Drawings

Figure 1 shows an exploded perspective view of the set forming a planter by means of modular elements with the assembly system of the invention for the connection of the component elements.

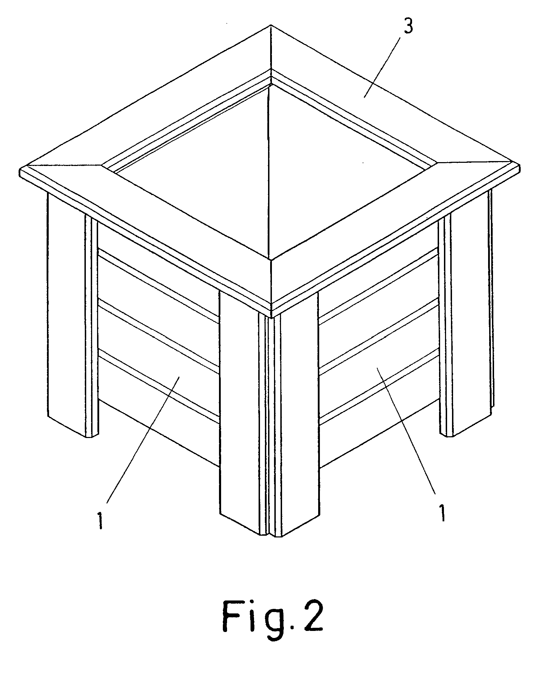

Figure 2 is a perspective view of the set of the planter of the previous figure assembled.
Figure 3 is an enlarged perspective view of an exploded partial set forming the planter.
Figure 4 is a perspective view of the set of the previous figure assembled.
Figure 5 is a perspective view of the same set of the previous figure from anther observation angle.
Figure 6 is an exploded perspective view of a set of parts for assembly connections according to the system of the invention.
Figure 7 is a front view of the exploded set of two assembly parts according to the invention.
Figure 8 is a view corresponding to section VIII-VIII indicated in the previous figure.
Figure 9 is a view of the set of the parts of Figure 7 coupled to one another.
Figure 10 is a view corresponding to section X-X indicated in the previous figure.
Figures 11, 12 and 13 show non-limiting examples of different insertion parts for the assembly connections according to the system of the invention.

### Detailed Description of the Invention

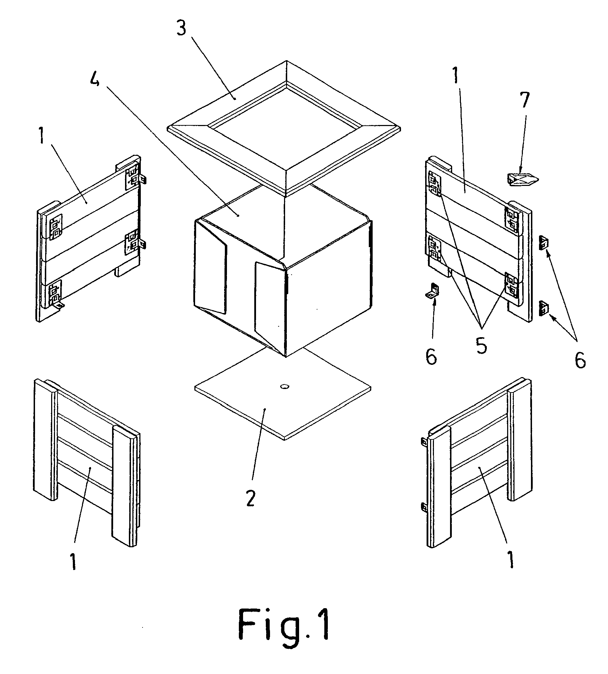

The object of the invention relates to an assembly system for forming planters by means of prefabricated modular elements, of the type, for example, such as that depicted in Figure 1, comprising elements (1) forming the side walls, a base element (2), a mouth element (3) and a laminar covering (4) for the inside of the formed planter, without this embodiment having a limiting character.

The system of the invention relates to an assembly for connecting the modular elements forming the planter, comprising engagement parts (5) which are fixed in the elements (1) forming the side walls and insertion parts (6), whereby an assembly is established with respect to the mentioned engagement parts (5) for connecting the coinciding elements in forming the planter.

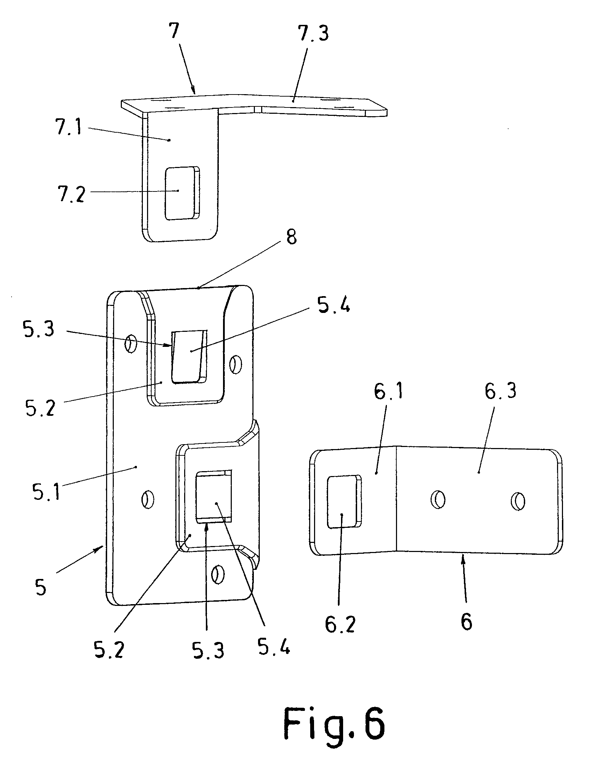

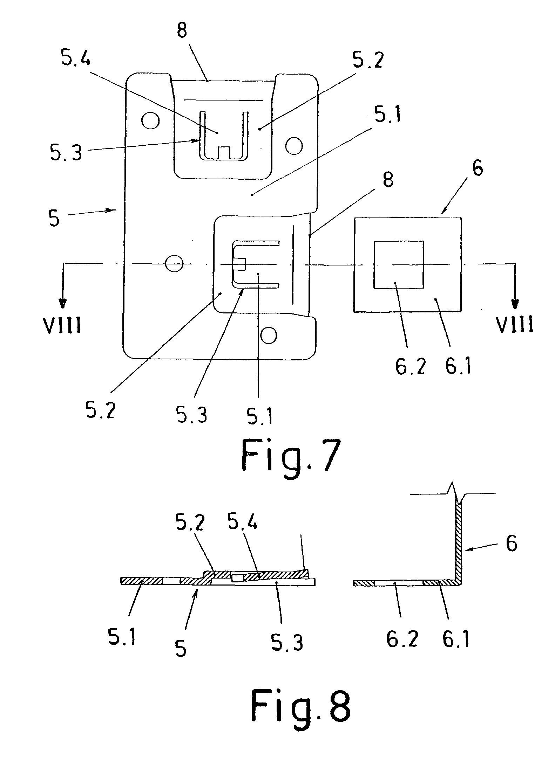

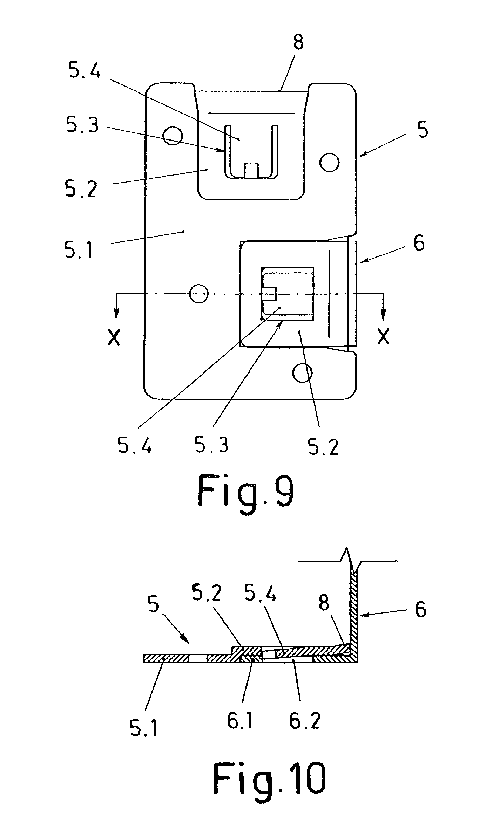

As is seen in Figures 6 to 10, the engagement parts (5) are made up of a plate (5.1) provided with deep drawings (5.2) determining housings into which the insertion parts are capable of being introduced (6).

The deep drawings (5.2) have a punching (5.3) with the wall bent inwardly, determining a locking flange (5.4) for establishing a locking retention of the insertion part (6) introduced into the housing defined by the deep drawing (5.2).

The insertion parts (6) determine at least one flat tab (6.1), shaped in correspondence with the housing defined by the deep-drawings (5.2) of the engagement parts (5) , each tab (6.1) being provided with a punching defining an opening (6.2) with respect to which the flange (5.4) of the deep drawings (5.2) is capable of locking for retaining the coupling of said insertion parts (6) in the engagement parts (5).

According to one embodiment, as observed in Figure 1, engagement parts (5) are fixed in the elements (1) forming the side walls of the planter, loose insertion parts (6) being used for establishing therewith an assembly with respect to the engagement parts (5) arranged in the coinciding elements (1) in the connections.

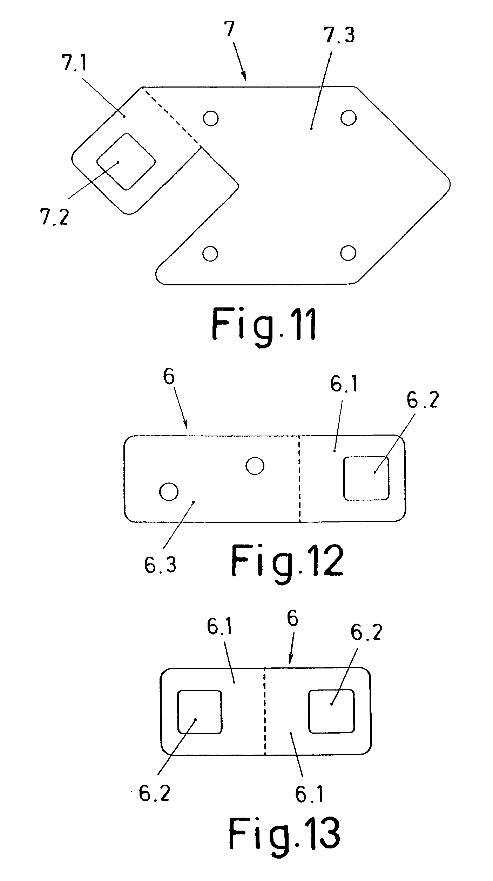

In this case the insertion parts (6) consist of, as observed in Figure 13, two tabs (6.1), whereby the insertion is established with respect to the engagement parts (5) of both coinciding elements (1) in each connection.

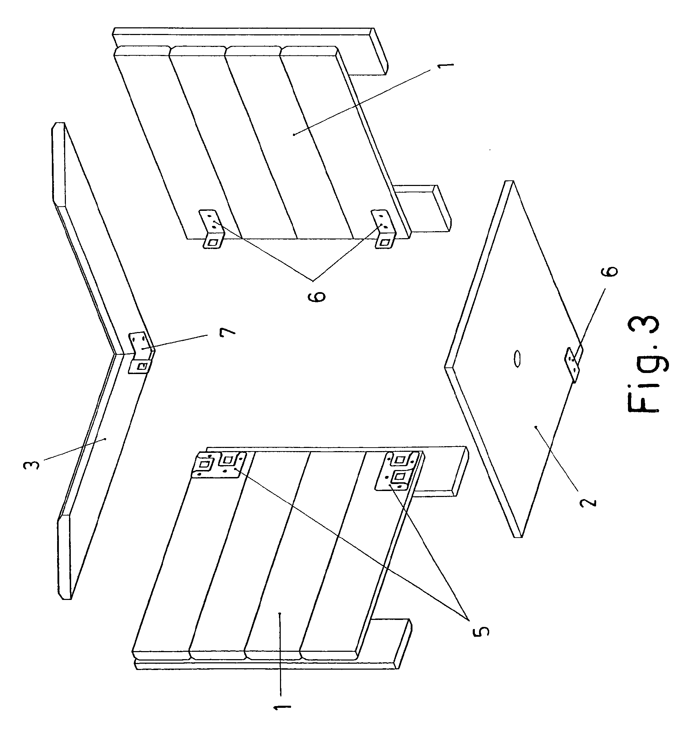

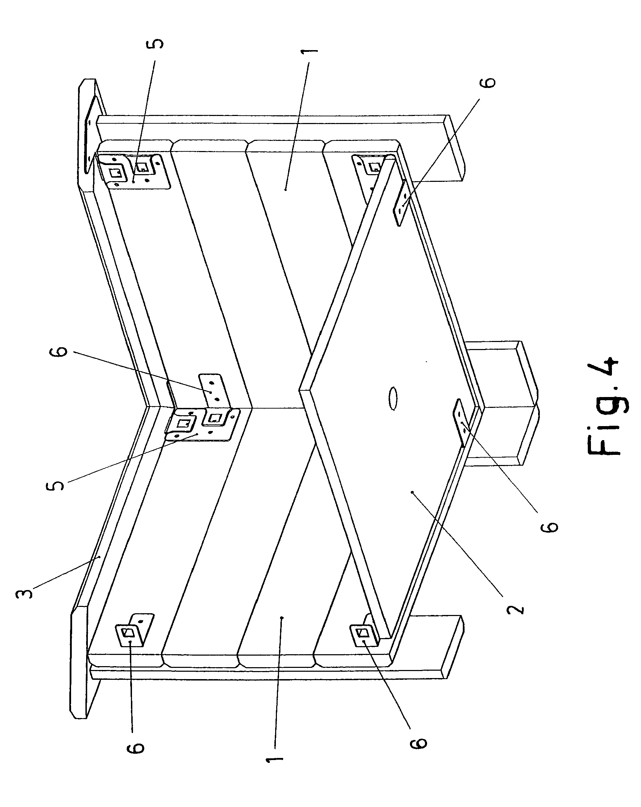

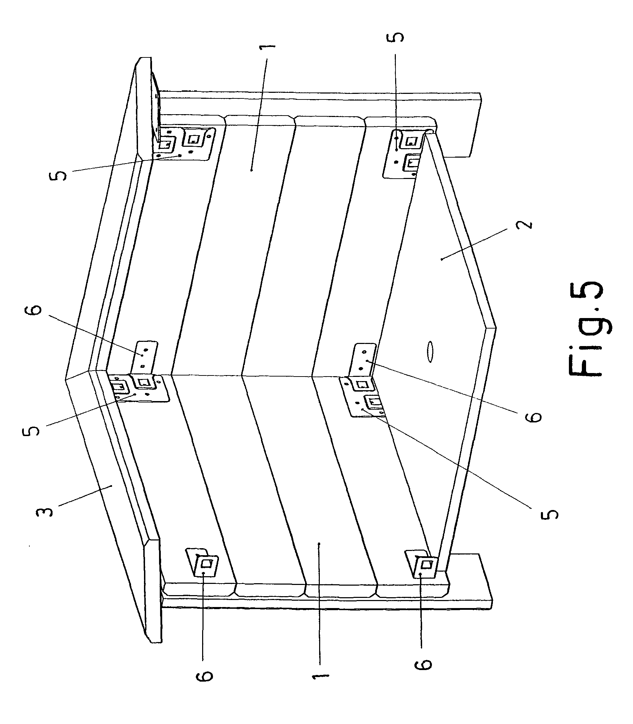

According to another embodiment which does not alter the concept of the assembly system, engagement parts (5) are fixed in one of the coinciding elements (1) in each connection , while insertion parts (6) are fixed in the other coinciding element (1) in the connection, as observed in Figures 3 to 5, such that it is only necessary to couple the elements (1) in the connection position thereof to form the connections, such that the insertion parts (6) incorporated in one of the elements (1) are introduced into the insertion cavities defined by the engagement parts (5) incorporated in the other element (1).

For this embodiment the engagement parts (5) can be arranged in elements (1) forming the planters and the insertion parts (6) can be arranged in others, or engagement parts (5) can be arranged in all the elements (1) on one side and insertion parts (6) on the other side, without it altering the concept of the assembly system according to the invention.

In this case the insertion parts (6) consist of, as observed in Figure 12, a tab (6.1) for establishing with it the insertion of the coupling with respect to the engagement parts (5), further having a wing (6.3) for establishing through it the fixing on the corresponding element forming the planter.

In any case, the insertion parts (6) can be straight for establishing the connection of component elements (1) of the one and the same side wall of the planters, being able to form planters of different width and length dimensions with the same type of modular elements (1); or they can be angular parts for connecting the elements forming the planters coinciding on edges, being able to form planters of different polygonal shapes by means of using insertion parts (6) with the corresponding angle for the connections of the assembly in each case.

The fastening of the base element (2) of the planters as well as the fastening of the mouth element (3) are established by means of an assembly similar to that described for connecting the elements (1) forming the side walls, insertion parts (6) such as those already described being able to be used, although for fastening the mouth element (3) specially configured insertion parts (7) are provided, for example as observed in Figures 6 and 11, with a tab (7.1) provided with a punching (7.2), for coupling with respect to the engagement parts (5) arranged in the elements (1) of the side walls of the planter, and a wing (7.3) with oversized width for fixing on the mouth element (3), corresponding with the connections of the section components of said element (3), thus reinforcing the formation thereof.

The engagement parts (5) are provided with a rectangular shape, with deep drawings (5.2) in relation to two perpendicular sides thus determining housings for the connection couplings between the elements (1) forming the side walls of the planters and the connection couplings of said elements (1) of the side walls with the base element (2) and with the mouth element (3) by means of the corresponding insertion parts (6 or 7).

The edge (8) of the deep drawings (5.2) is provided such that it is bent outwardly, thus determining a mouth facilitating the insertion of the tabs (6.1 or 7.1) of the insertion parts (6 or 7) into the couplings of the connections forming the planters.

In any case the shape of said engagement parts (5) is not limiting, the same being able to have any configuration and a variable number of deep drawings (5) determining housings for coupling the insertion parts (6 or 7) in the connections forming the planters.

Neither the shape of the flanges (5.1) in the engagement parts (5) for retaining the assembly couplings in the connections of the planters, nor the shape of the openings (6.2 or 7.2) in the parts (6 or 7) for locking the retention of the connections, these openings (6.2 or 7.2) being able to be in the form of a single window or in the form of several parallel grooves located crosswise to the insertion direction of the tab (6.1 or 7.1) of the insertion parts (6 or 7), alters the concept of the proposed assembly system.

## Claims

1. An assembly system for forming planters applicable for planters made up of modular elements, comprising elements (1) forming the side walls, a base element (2) and a mouth element (3), **characterized in that** it comprises engagement parts (5) which are fixed on the elements (1) forming the side walls of planters, and insertion parts (6) which are capable of coupling with respect to said engagement parts (5), the engagement parts (5) determining housings provided with a locking flange (5.4), while the insertion parts (6) determine tabs (6.1) which are capable of being introduced into the housings of the engagement parts (5), said tabs (6.1) having an opening (6.2) with respect to which the flange (5.4) of the housing in which the insertion is established forms a retention engagement.

2. The assembly system for forming planters according to claim 1, **characterized in that** the engagement parts (5) are made up of a plate having deep drawings (5.2) determining the housings for receiving the tabs (6.1) of the insertion parts (6), said deep drawings (5.2) having a punching (5.3) with the wall bent inwardly forming the locking flange (5.4).

3. The assembly system for forming planters according to claim 1, **characterized in that** the insertion parts (6) are made up of a plate determining at least one tab (6.1) shaped in correspondence with the housings defined by the engagement parts (5), said tab (6.1) being provided with a punching which forms the opening (6.2) for the retention engagement of the flange (5.4) of the insertion housing.

4. The assembly system for forming planters according to claims 1 and 2, **characterized in that** the engagement parts (5) have deep drawings (5.2) determining housings relating to two perpendicular edges, allowing the connections between the elements (1) forming the side walls of the planters and the connection of said elements (1) with the base element (2) and with the mouth element (3) to be established by means of the same engagement parts (5).

5. The assembly system for forming planters according to claims 1 and 3, **characterized in that** the insertion parts (6) determine two opposite tabs (6.1) for establishing the connections, as loose, independent parts, between respective engagement parts (5) fixed in the coinciding elements (1) of the side walls of the planters.

6. The assembly system for forming planters according to claims 1 and 3, **characterized in that** the insertion parts (6) determine a tab (6.1) and in the opposite part a wing (6.3) for fixing by means of the wing (6.3) in one of the coinciding elements in the connections forming the planters and coupling by means of the tab (6.1) with respect to an engagement part (5) fixed in the other element forming the planter coinciding with the connection.

7. The assembly system for forming planters according to claims 1, 3, 5 and 6, **characterized in that** the insertion parts (6) are flat, allowing the connection of successive elements (1) of one and the same wall in forming the side walls of the planters.

8. The assembly system for forming planters according to claims 1, 3, 5 and 6, **characterized in that** the insertion parts (6) are angular, allowing the connection between the elements forming the planters coinciding on edges.

9. The assembly system for forming planters according to claims 1 and 3, **characterized in that** for connecting the element (1) of the side walls of the planters with the mouth element (3), insertion parts (7) formed by a tab (7.1) for coupling with respect to the engagement parts (5) and an oversized wing (7.3) for fixing on the mouth element (3) in the connection areas of the component sections thereof are provided.

10. The assembly system for forming planters according to claims 1 and 2, **characterized in that** the deep drawings (5.2) of the engagement parts (5) have an edge (8) bent outwardly, determining a flared mouth which facilitates introducing the tabs (6.1) of the insertion parts (6) in the assembly of the connections forming the planters.
